# EUROPÄISCHE PATENTSCHRIFT

(11) **EP 4 523 325 B1**
(45) Veröffentlichungstag und Bekanntmachung des Hinweises auf die Patenterteilung: **25.03.2026**
(21) Anmeldenummer: 22735899.1
(22) Anmeldetag: 27.06.2022
(51) Int. Cl.: H02S 20/24, F24S 25/10, F24S 25/16, F24S 25/37, F24S 25/61, F24S 25/65

(54) **MODULTRÄGER FÜR PHOTOVOLTAIKMODULE UND VERFAHREN ZUM AUFBAUEN DES MODULTRÄGERS**
MODULE CARRIER FOR PHOTOVOLTAIC MODULES AND METHOD FOR CONSTRUCTING THE MODULE CARRIER
SUPPORT DE MODULE POUR MODULES PHOTOVOLTAÏQUES ET PROCÉDÉ DE CONSTRUCTION DU SUPPORT DE MODULE

(43) Veröffentlichungstag der Anmeldung: 19.03.2025
(73) Patentinhaber: Novotegra GmbH, 72072 Tübingen (DE)
(72) Erfinder: MEYER, David, 6374 Buochs (CH); ERNI, Roland, 6252 Dagmersellen (CH)
(74) Vertreter: Lorenz Seidler Gossel Part. mbB
(86) Internationale Anmeldenummer: PCT/EP2022/067621
(87) Internationale Veröffentlichungsnummer: WO 2024/002463

(56) Entgegenhaltungen:
- DE-U1- 202011 100 947
- DE-U1- 202012 001 526
- DE-U1- 202012 101 346
- DE-U1- 202018 103 244
- DE-U1- 202018 103 248

## Beschreibung

### Technisches Gebiet

Die Erfindung betrifft einen Modulträger für Photovoltaikmodule und ein Verfahren zum Aufbauen des Modulträgers. Der Modulträger dient dazu, ein oder mehrere Photovoltaikmodule auf einer Fläche wie beispielsweise einem Dach und insbesondere auf einem Flachdach zu installieren.

### Stand der Technik

Aus der Druckschrift DE 20 2010 007 658 U1 ist ein Modulträger für Photovoltaikmodule zum Aufstellen auf Flachdächern bekannt. Der Modulträger umfasst Auflageprofile, auf denen hohe und niedrige Stützen montiert sind. Die Stützen sind als Stützprofile ausgebildet und sind im rechten Winkel zu den Auflageprofilen angeordnet, sodass die Stützprofile und die Auflageprofile eine gitterförmige Struktur bilden. Ein hohes Stützprofil und ein niedriges Stützprofil tragen zusammen ein Photovoltaikmodul. Um die Stützprofile auf den Auflageprofilen zu befestigen, sind an jedem Kreuzungspunkt der gitterförmigen Struktur zwei speziell ausgebildete Klemmen, zwei Schrauben und zwei Muttern erforderlich. Die Schrauben werden von unten durch das Auflageprofil und die Klemmen von oben über die Schrauben gesteckt und anschliessend mit Muttern fixiert. Einen solchen Modulträger aufzubauen benötigt relativ viel Zeit. Zudem muss der Monteur eine ausreichende Menge an Schrauben, Klemmen und Muttern bei sich tragen und er benötigt für die Schraubverbindungen normalerweise einen Elektroschrauber. Ein weiterer Nachteil ist, dass alle Stützprofile und Auflageprofile zuerst zueinander ausgerichtet werden müssen und zwar bezüglich deren Winkelorientierung und deren Position, bevor die Stützprofile auf dem Auflageprofilen befestigt werden können.

Ein weiteres Montagesystem ist aus DE 20 2018 103244 U1 bekannt. Das System umfasst eine Anordnung aus Bodenschienen und Querstreben. Auf den Bodenschienen sind Stützelemente zur Aufnahme der Photovoltaikmodule angebracht.

### Darstellung der Erfindung

Eine Aufgabe der Erfindung ist es, einen Modulträger für Photovoltaikmodule anzugeben, der besonders einfach aufbaubar ist und die einzelnen Komponenten des Modulträgers miteinander verbunden werden können, ohne dass dazu Befestigungsmittel erforderlich sind.

Vorteilhafter Weise ist der Modulträger ohne Spezialwerkzeug aufbaubar. Als Werkzeug ist beinahe jedes Handwerkzeug geeignet, das als Hebel benutzt werden kann.

Die Aufgabe wird durch einen Modulträger für Photovoltaikmodule mit den in Patentanspruch 1 angegebenen Merkmalen gelöst.

Der erfindungsgemässe Modulträger für Photovoltaikmodule umfasst stangenförmige Verbindungsprofile und Basisplatten, auf denen Stützen zum Tragen der Photovoltaikmodule befestigt sind. Die Basisplatten sind mittels den stangenförmigen Verbindungsprofilen untereinander verbindbar. Die Basisplatten weisen jeweils eine Längsverbinder-

Aufnahme auf, in die eines der Verbindungsprofile in einer durch die Längsverbinder-Aufnahme vorgegebenen ersten Steckrichtung steckbar ist. Die Längsverbinder-Aufnahme umfasst eine Ausbuchtung, die quer zur ersten Steckrichtung angeordnet ist. Ein Abschnitt des in der Längsverbinder-Aufnahme steckenden Verbindungsprofils ragt aufgrund einer plastischen Verformung in die Ausbuchtung und bildet mit dieser einen Formschluss.

Vorteilhafte Weiterbildungen der Erfindung ergeben sich aus den in den abhängigen Patentansprüchen angegebenen Merkmalen.

Bei einer Ausführungsform des erfindungsgemässen Modulträgers weist die Basisplatte eine Querverbinder-Aufnahme auf, die so ausgebildet ist, dass sie eine zweite Steckrichtung vorgibt, die quer zur ersten Steckrichtung verläuft, sodass eines der stangenförmigen Verbindungsprofile in der zweiten Steckrichtung in die Querverbinder-Aufnahme steckbar ist.

Bei einer weiteren Ausführungsform des erfindungsgemässen Modulträgers weist die Basisplatte eine Längsseite und eine Stirnseite auf. An der Stirnseite sind die Längsverbinder-Aufnahme und eine weitere Längsverbinder-Aufnahme angeordnet, sodass zwei der stangenförmigen Verbindungsprofile in der ersten Steckrichtung in die Längsverbinder-Aufnahmen steckbar sind.

Bei einer zusätzlichen Ausführungsform des erfindungsgemässen Modulträgers weist die Basisplatte eine zweite Stirnseite auf. An der zweiten Stirnseite ist wenigstens eine zusätzliche Längsverbinder-Aufnahme angeordnet, sodass eines der stangenförmigen Verbindungsprofile in einer zur ersten Steckrichtung entgegengesetzten Richtung in die zusätzliche Längsverbinder-Aufnahme steckbar ist.

Bei einer Weiterbildung des erfindungsgemässen Modulträgers ist die Basisplatte aus Kunststoff oder Beton hergestellt.

Bei einer anderen Weiterbildung des erfindungsgemässen Modulträgers ist der Kunststoff recycelter Kunststoff. Dadurch kann der Modulträger besonders kostengünstig und umweltschonend hergestellt werden.

Bei einer zusätzlichen Weiterbildung des erfindungsgemässen Modulträgers weist die Längsverbinder-Aufnahme einen Tiefenanschlag zur Begrenzung der Stecktiefe auf. Die Längsverbinder-Aufnahme ist im Bereich des Tiefenanschlags oben als Kappe ausgebildet, unter die das Verbindungsprofil steckbar ist.

Vorteilhafterweise weist die die Längsverbinder-Aufnahme des erfindungsgemässen Modulträgers einen Führungssteg und eine parallel dazu angeordnete Führungsnut auf. Das stangenförmige Verbindungsprofil ist so profiliert, dass es mit dem Führungssteg und der Führungsnut einen Formschluss bildet, wenn es in der Längsverbinder-Aufnahme steckt. Dadurch kann eine besonders stabile Verbindung geschaffen werden.

Zudem kann bei dem erfindungsgemässen Modulträger vorgesehen sein, dass das Verbindungsprofil aus Aluminium hergestellt ist. Ein solches Verbindungsprofil kann mit gängigem Werkzeug und prozesssicher bearbeitet werden.

Bei dem erfindungsgemässen Modulträger kann vorgesehen sein, dass die Basisplatte einen Höcker aufweist, auf den eine der Stützen aufschiebbar ist. Der Höcker und die Stütze sind so ausgebildet, dass die Stütze im montierten Zustand mit dem Höcker in vertikaler Richtung formschlüssig verbunden ist.

Bei einer Ausführungsform des erfindungsgemässen Modulträgers weist die Stütze unten Laschen auf. Der Höcker umfasst seitlich angeordnete Nuten, in die die Laschen der Stütze hineinschiebbar sind.

Bei einer weiteren Ausführungsform des erfindungsgemässen Modulträgers weist die Basisplatte neben dem Höcker einen Schlitz und die Stütze einen mit einem Handwerkzeug plastisch verformbaren Abschnitt auf. Im montierten Zustand ragt der plastisch verformte Abschnitt in den Schlitz und bildet mit dem Schlitz einen Formschluss.

Bei einer anderen Ausführungsform des erfindungsgemässen Modulträgers ist ein Teil der Stützen niedriger als ein weiterer Teil der Stützen.

Bei einer zusätzlichen Ausführungsform des erfindungsgemässen Modulträgers sind die Stützen aus Aluminium hergestellt.

Bei einer Weiterbildung des erfindungsgemässen Modulträgers ist das Verbindungsprofil mit einem streifenförmigem, flexiblen Bauteil bedeckt. Das streifenförmige, flexible Bauteil kann beispielsweise ein Netz oder ein Gewebe sein. Auf dem Bauteil ist der Ballast angeordnet.

Zudem wird ein Verfahren zum Aufbauen des oben beschriebenen Modulträgers für Photovoltaikmodule vorgeschlagen. Dabei wird eines der stangenförmigen Verbindungsprofile in die Längsverbinder-Aufnahme gesteckt. Anschliessend wird mit Hilfe eines als Hebel einsetzbaren Handwerkzeugs der Abschnitt des in der Längsverbinder-Aufnahme steckenden Verbindungsprofils in die Ausbuchtung gedrückt.

### Kurze Beschreibung der Zeichnungen

Im Folgenden wird die Erfindung mit mehreren Ausführungsbeispielen anhand von 22 Figuren weiter erläutert.
- Figur 1: zeigt eine erste mögliche Ausführungsform des erfindungsgemässen Modulträgers für Photovoltaikmodule in einer dreidimensionalen Ansicht.
- Figur 2: zeigt die erste Ausführungsform des erfindungsgemässen Modulträgers für Photovoltaikmodule in der Seitenansicht.
- Figur 3: zeigt die erste Ausführungsform des erfindungsgemässen Modulträgers in der Seitenansicht mit montierten Photovoltaikmodulen.
- Figur 4: zeigt die erste Ausführungsform des erfindungsgemässen Modulträgers mit mehreren Photovoltaikmodulen in einer dreidimensionalen Ansicht.
- Figur 5: zeigt eine erste mögliche Ausführungsform einer Basisplatte für den Modulträger in einer dreidimensionalen Ansicht.
- Figur 6: zeigt eine zweite mögliche Ausführungsform einer Basisplatte für den Modulträger in einer dreidimensionalen Ansicht.
- Figur 7: zeigt einen Ausschnitt der Basisplatte in einer dreidimensionalen Ansicht.
- Figur 8: zeigt die zweite Ausführungsform der Basisplatte in einer dreidimensionalen Ansicht schräg von unten.
- Figur 9: zeigt die Basisplatte mit zwei an einer Stirnseite der Basisplatte befestigten Verbindungsprofilen.
- Figur 10: zeigt die Basisplatte mit einem an der Stirnseite und einem an der Längsseite befestigten Verbindungsprofil.
- Figur 11: zeigt die Basisplatte mit an beiden Stirnseiten befestigten Verbindungsprofilen und einer auf der Basisplatte befestigten hohen Stütze.
- Figur 12: zeigt die Basisplatte mit drei daran befestigten Verbindungsprofilen und einer auf der Basisplatte befestigten niedrigen Stütze.
- Figur 13: zeigt eine erste mögliche Ausführungsform des Verbindungsprofils in einer dreidimensionalen Ansicht.
- Figur 14: zeigt die erste Ausführungsform des Verbindungsprofils in der Ansicht von vorne.
- Figur 15: zeigt eine zweite mögliche Ausführungsform des Verbindungsprofils in einer dreidimensionalen Ansicht.
- Figur 16: zeigt die zweite Ausführungsform des Verbindungsprofils in der Ansicht von vorne.
- Figur 17: zeigt einen Stapel Verbindungsprofile in einer dreidimensionalen Ansicht.
- Figur 18: zeigt den Stapel in der Ansicht von vorne.
- Figur 19: zeigt eine dritte Ausführungsform der Basisplatte und eine dritte Ausführungsform des Verbindungsprofils in einer dreidimensionalen Ansicht.
- Figur 20: zeigt die dritte Ausführungsform der Basisplatte mit aufgesteckten Verbindungsprofil.
- Figur 21: zeigt eine erste mögliche Ausführungsform einer Stütze für die Basisplatte in der Seitenanasicht.
- Figur 22: zeigt eine zweite mögliche Ausführungsform einer Stütze für die Basisplatte in der Seitenanasicht.

### Wege zur Ausführung der Erfindung

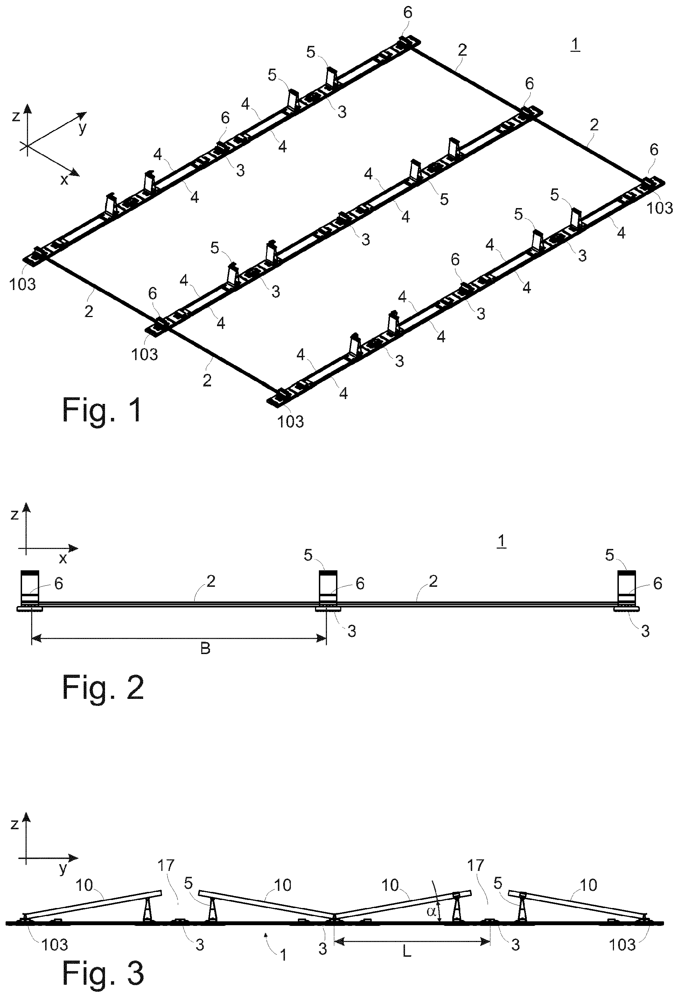

Eine mögliche Ausführungsform des Modulträgers 1 für Photovoltaikmodule 10 ist in den Figuren 1 bis 4 dargestellt. Zum besseren Verständnis ist in den Figuren ein Koordinatensystem abgebildet. Der Modulträger 1 umfasst mehrere Basisplatten 3 und 103, die mit in Längsrichtung (parallel zur y-Achse) verlaufenden Verbindungsprofilen 4 und in Querrichtung (parallel zur x-Achse) verlaufenden Verbindungsprofilen 2 verbindbar sind. Die Grösse des Modulträgers 1 ist frei wählbar. Der Modulträger 1 kann mit beliebig vielen Basisplatten 3, 103 und Verbindungsprofilen 2 und 4 aufgebaut werden.

Im Folgenden wird davon ausgegangen, dass jedem Photovoltaikmodul 10 ein Modulträgerfeld zugeordnet ist; alle Modulträgerfelder zusammen bilden den gesamten Modulträger 1. Die Grösse eines einzelnen Modulträgerfelds kann an die Grösse des zu montierenden Photovoltaikmoduls 10 angepasst werden. Dazu werden die Verbindungsprofile 2 und/oder 4 auf die erforderliche Länge gebracht. Auf diese Weise kann ein Modulträgerfeld mit einer frei wählbaren Breite B und einer frei wählbaren Länge L aufgebaut werden.

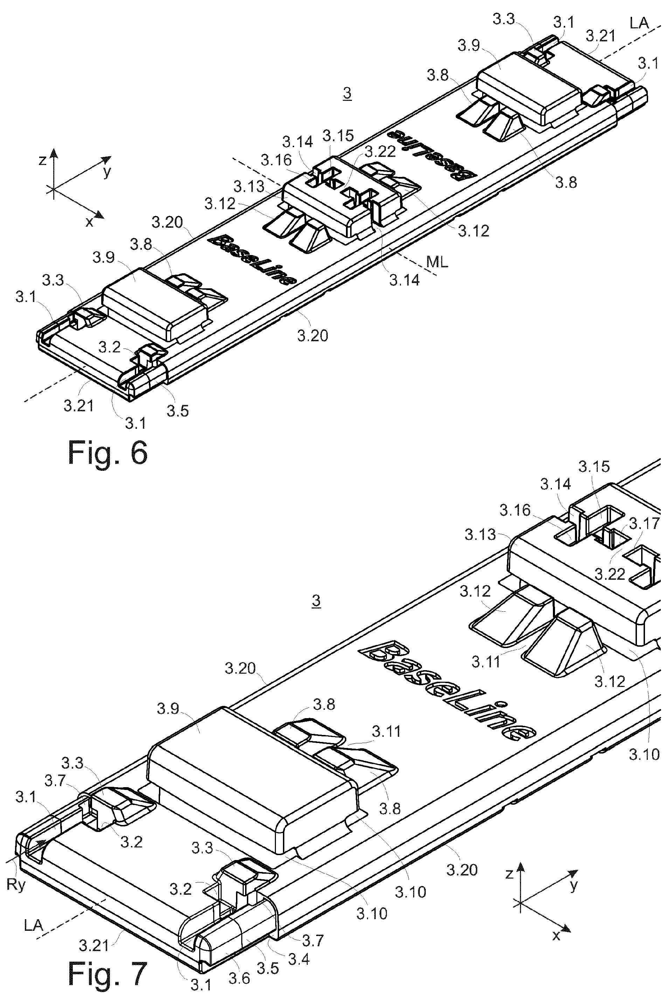

Zwei benachbarte Photovoltaikmodule 10 werden mittels einer Modulklemme (in den Figuren nicht gezeigt) auf einer der Stützen 5, 6 befestigt. Dabei definiert die Modulklemme den Abstand zwischen den beiden Photovoltaikmodulen 10. Der Höcker 3.13 kann in der Mitte einen Steg 3.22 (siehe Figur 6, 7) aufweisen, der die gleiche Breite hat wie der Abstand zwischen zwei benachbarten Photovoltaikmodulen 10. Da in diesem Fall das Verbindungsprofil 2 die gleiche Länge wie das zu verbauende Photovoltaikmodul 10 hat, genügt es die Länge des Photovoltaikmoduls 10 zu kennen, um das Verbindungsprofil 2 auf die richtige Länge kürzen zu können.

Die Verbindungsprofile 2 und/oder 4 können beispielsweise als Stangenware mit einer definierten Länge auf Lager liegen und bei Bedarf zum Beispiel am Montageort auf die erforderliche Länge gekürzt werden. Es ist aber auch möglich die Verbindungsprofile 2 und/oder 4 schon vorab auf die gewünschte Länge zu bringen oder sie als vorkonfektionierte Ware vorzuhalten.

Wie aus Figur 1 zu erkennen ist, ist es nicht erforderlich die Basisplatten 3 einer jeden Reihe über ein Verbindungsprofil 2 miteinander zu verbinden. Die Verbindungsprofile 2 haben primär den Zweck den Querabstand zwischen den Basisplatten 3 festzulegen. In Längsrichtung sind jeweils zwei Basisplatten 3 vorzugsweise mit jeweils zwei Verbindungsprofilen 4 miteinander verbunden. Die Verbindungsprofile 2 definieren den Längsabstand zwischen den Basisplatten 3 und geben dem gesamten Modulträger 1 eine ausreichende Stabilität.

Im Randbereich des Modulträgers 3 können Basisplatten 103 vorgesehen sein. Diese unterscheiden sich von den Basisplatten 3 im Wesentlichen dadurch, dass sie nicht an beiden Stirnseiten, sondern nur an einer der beiden Stirnseiten Aufnahmen für die Verbindungsprofile 4 aufweisen. Der Vorteil ist, dass die Basisplatten 103 nur wenig über die Photovoltaikmodule 10 hinausragen, sodass beim Begehen der Photovoltaikmodulfelds die Stolpergefahr reduziert wird.

Auf den Basisplatten 3 und 103 sind hohe Stützen 5 und niedrige Stützen 6 angeordnet respektive anordenbar. Auf den Stützen 5 und 6 sind die Photovoltaikmodule 10 befestigt. Werden die Stützen 5 und 6, wie in den Figuren 1 bis 4 gezeigt angeordnet, ergibt sich für die Photovoltaikmodule 10 die in Figur 3 gezeigte Anordnung. Dabei sind jeweils zwei benachbarte Photovoltaikmodule 10 zueinander geneigt. Zwischen den etwas weiter beabstandeten Photovoltaikmodulen 10 kann ein Weg 17 für Personal vorgesehen sein.

Um die gesamte Photovoltaikanlage sicher auf dem Untergrund zu fixieren, sodass sie den einschlägigen Normen bezüglich den möglichen Windkräften genügt, kann der Modulträger 1 an einer oder mehreren Stellen mit Ballast versehen werden.

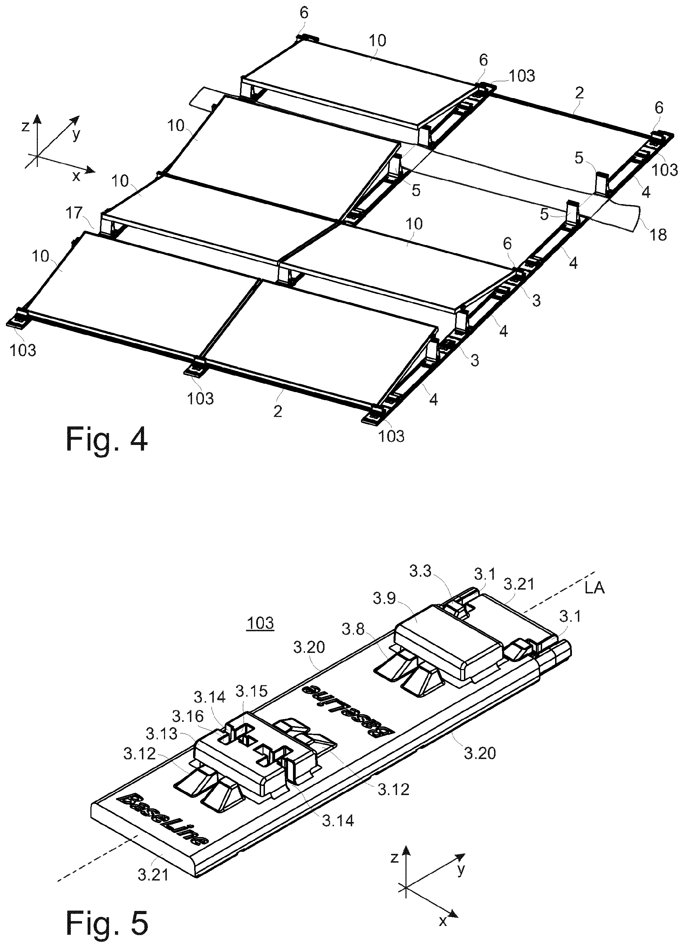

Bei einer Möglichkeit um den Ballast aufzubringen, wird zuerst, wie in Figur 4 gezeigt, ein streifenförmig ausgebildetes, flexibles Bauteil 18 ausgelegt. Vorzugsweise wird das streifenförmige, flexiblen Bauteil 18 in Querrichtung (parallel zur x-Achse) angeordnet. Das streifenförmige, flexible Bauteil 18 kann, wie in Figur 4 gezeigt, die Basisplatten 3 bedecken. Statt dessen oder zusätzlich dazu es kann auch die Längsverbindungen 4 bedecken (in den Figuren nicht gezeigt). Das Bauteil 18 kann dann mit Ballast in Form von Kies, Schotter oder dergleichen bedeckt werden.

Alternativ oder zusätzlich dazu kann der Ballast aus grösseren Steinen, Betonplatten oder Betonblöcken gebildet sein. Er wird vorzugsweise unterhalb den Photovoltaikmodulen 10 auf den Verbindungsprofilen 4 platziert.

Als Basisplatte kann die in den Figuren 6 bis 8 zeigte Basisplatte 3 dienen. Alternativ oder zusätzlich dazu kann auch die in Figur 5 zeigte Ausführungsform der Basisplatte 103 eingesetzt werden. Die Basisplatten 3 und 103 haben jeweils zwei Längsseiten 3.20 und zwei Stirnseiten 3.21.

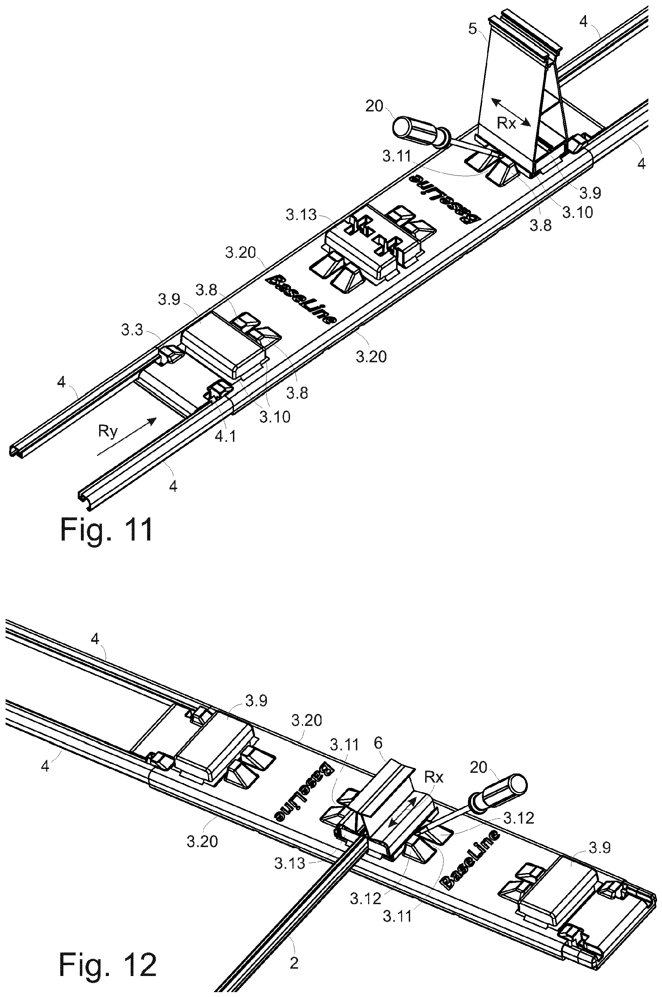

Die Basisplatte 3 kann, wie in Figur 6 gezeigt, symmetrisch zur Mittellinie ML aufgebaut sein und sie kann in der Mitte einen Höcker 3.13 aufweisen. Wenn der Höcker 3.13 wie in Figur 6 gezeigt ausgebildet ist, kann er sowohl eine Stütze 6 als auch ein Verbindungsprofil 2 aufnehmen (siehe Figur 12).

Damit das Verbindungsprofil 2 am Höcker 3.13 respektive an der Basisplatte 3 befestigt werden kann, weist der Höcker 3.13 eine Aufnahme 3.14 auf, die die Steckrichtung Rx für das Verbindungsprofil 2 vorgibt. Die Aufnahme 3.14, die auch als Querverbinder-Aufnahme bezeichnet wird, erstreckt sich vorzugsweise parallel zur Mittellinie ML und weist eine Ausbuchtung 3.16 auf, die sich quer zur Mittellinie ML erstreckt.

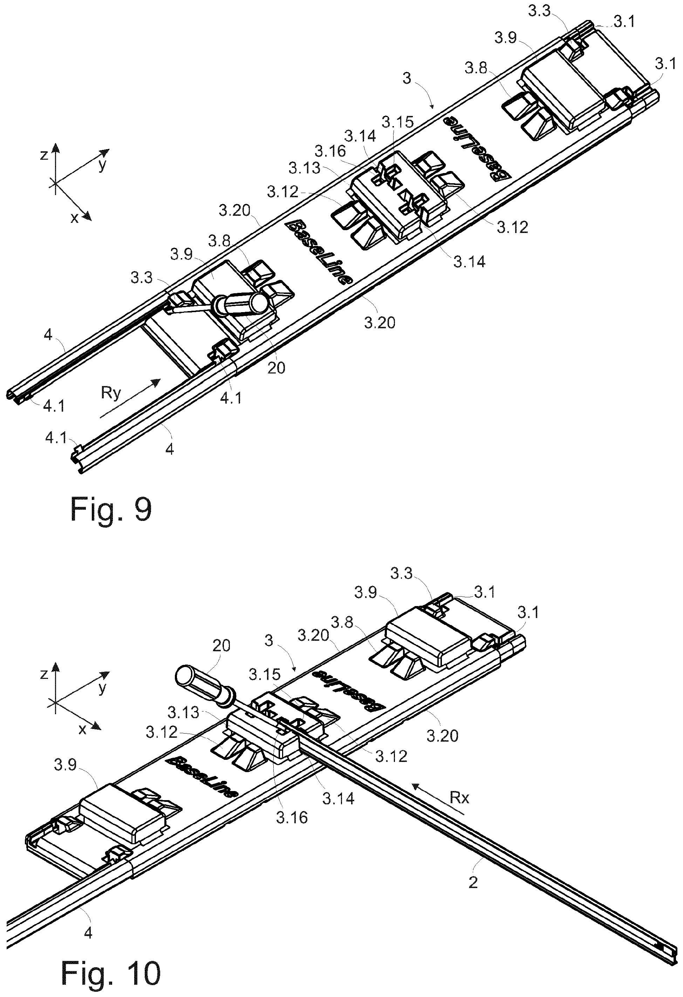

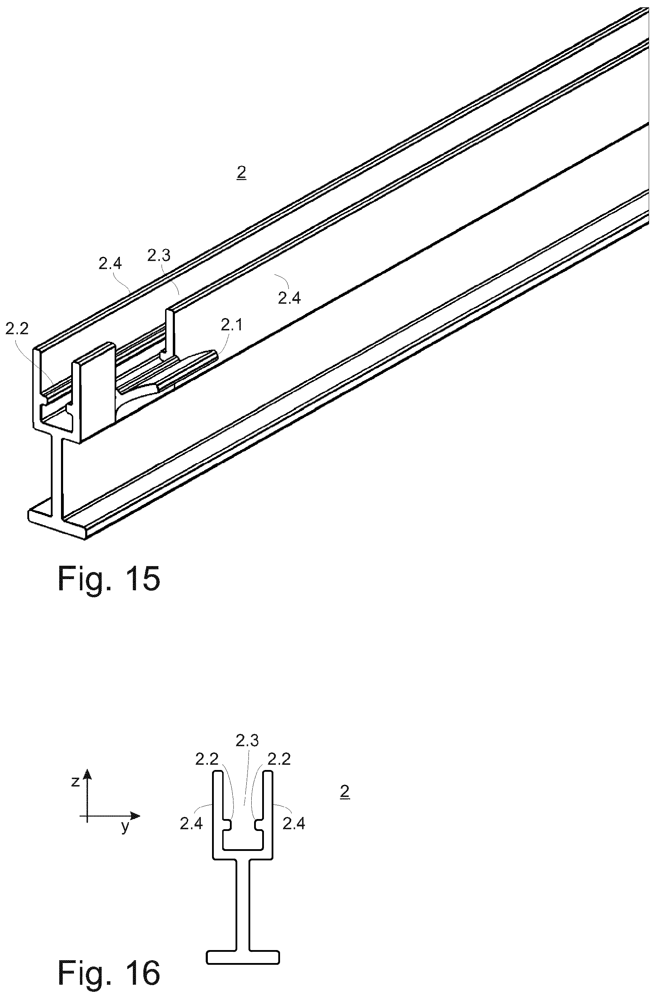

Um das Verbindungsprofil 2 mit der Basisplatte 3 zu verbinden, kann wie folgt vorgegangen werden. Zuerst steckt man das Verbindungsprofil 2 bis zum Anschlag in die Aufnahme 3.14. Anschliessend wird ein Handwerkzeug 20, beispielsweise ein Schraubenzieher, in die Nut 2.3 des Verbindungsprofils 2 gesteckt (siehe Figuren 10 und 15). Der als Hebel dienende Schraubenzieher wird nun quer zur Steckrichtung Rx in Richtung der Ausbuchtung 3.16 gedrückt. Dabei verformt sich ein Abschnitt 2.1 des Stegs 2.4, sodass er in die Ausbuchtung 3.16 ragt. Mit dem Schraubenzieher wird vorzugsweise so fest gegen den Steg 2.4 gedrückt, dass der Steg 2.4 aufreisst und als Nase 2.1 mit der Ausbuchtung 3.16 einen Formschluss bildet. Weil der Steg 2.4 links und rechts von der Nase 2.1 an der Wandung des Höckers 3.13 anliegt, wird der Steg 2.4 dort nicht verformt.

Die Aufnahme 3.14 kann zusätzlich gegenüber der Ausbuchtung 3.16 eine weitere, gleich geformte Ausbuchtung 3.15 aufweisen. Dies hat den Vorteil, dass der eine Steg 2.4 des Verbindungsprofils 2 in die Ausbuchtung 3.16 und/oder der andere Steg 2.4 des Verbindungsprofils 2 in die andere Ausbuchtung 3.15 gedrückt werden kann.

Um zu verhindern, dass der Schraubenzieher während des Drückens aus der Nut 2.3 herausrutscht, kann im unteren Bereich der Nut 2.3 ein Wulst 2.2 vorgesehen sein. Wenn die Klinge des Schraubenziehers unter den Wulst 2.2 am Steg 2.4 anliegt, sorgt der Wulst 2.2 dafür, dass die Klinge nicht nach oben aus der Nut 2.3 herausrutschen kann.

Bei der in den Figuren 15 und 16 gezeigten Ausführungsform ist das Verbindungsprofil 2 achssymmetrisch (Symmetrieachse parallel zur z-Achse) ausgebildet. Dies hat den Vorteil, dass man bei der Montage nicht auf die Orientierung des Verbindungsprofils 2 zu achten braucht. Das so geformte Verbindungsprofil 2 hat zwei gleich aufgebaute plastisch verformbare Stege 2.4. Die Nut 2.3 befindet sich zwischen den beiden Stegen 2.4.

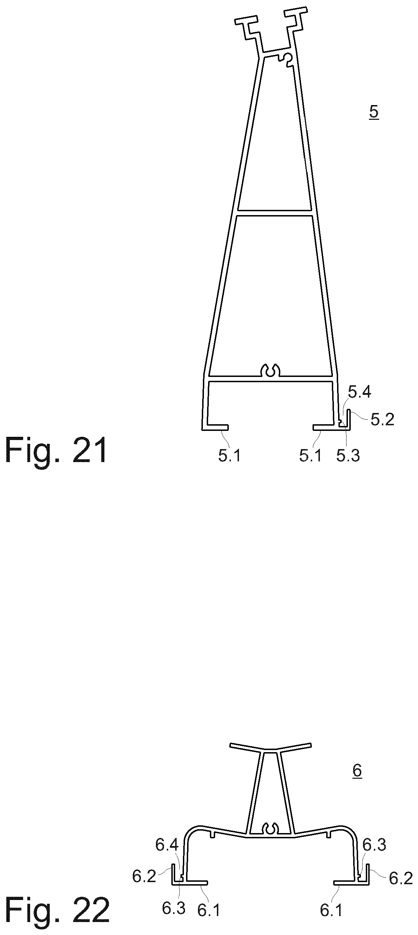

Vorzugsweise auf beiden Seiten des Höckers 3.13 befinden sich jeweils zwei Erhebungen 3.12 und dazwischen jeweils ein Schlitz 3.11. Damit die Stütze 6 am Höcker 3.13 respektive an der Basisplatte 3 einfach befestigt werden kann, weist der Höcker 3.13 seitlich zwei Nuten 3.10 auf. Die Stütze 6 weist unten zwei entsprechende Laschen 6.1 auf. Um die Stütze 6 auf der Basisplatte 3 zu montieren, werden die Laschen 6.1 seitlich in die Nuten 3.10 geschoben. Auf diese Weise wird verhindert, dass die Stütze 6 nach oben vom Höcker 3.13 abrutschen kann. Anschliessend wird die Klinge des Schraubenziehers in die Nut 6.4 der Stütze 6 gesteckt (siehe Figuren 12 und 22). Der als Hebel dienende Schraubenzieher wird nun quer zur Steckrichtung Rx in Richtung des Schlitzes 3.11 gedrückt. Dabei verformt sich ein Abschnitt des Stegs 6.2, sodass er in den Schlitz 3.11 ragt. Mit dem Schraubenzieher wird vorzugsweise so fest gegen den Steg 6.2 gedrückt, dass er aufreisst, eine Nase bildet und mit dem Schlitz 3.11 und den beiden Erhebungen 3.12 einen Formschluss bildet. Weil der Steg 6.2 links und rechts von der Nase an beiden Erhebungen 3.12 anliegt, wird der Steg 6.2 dort nicht verformt.

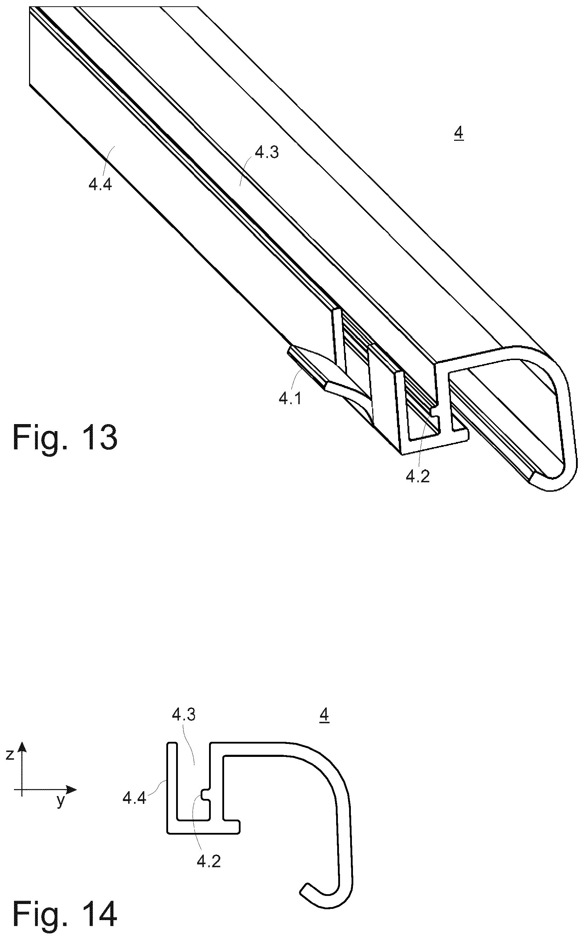

An den beiden Stirnseiten 3.20 weist die Basisplatte 3, wie in Figur 7 gezeigt, jeweils zwei Aufnahmen 3.1 auf. In die Aufnahmen 3.1, die auch als Längsverbinder-Aufnahme bezeichnet wird, kann jeweils eines der Verbindungsprofile 4 gesteckt und mit der Basisplatte 3 verbunden werden (siehe Figuren 9 und 13). Die Aufnahmen 3.1 geben die Steckrichtung Ry für die Verbindungsprofile 4 vor. Die Aufnahme 3.1 erstreckt sich vorzugsweise parallel zur Längsachse LA der Basisplatte 3 und weist eine erste Ausbuchtung 3.2 auf, die sich vorzugsweise quer zur Längsachse LA erstreckt. Am hinteren Ende der Aufnahme 3.1 befindet sich ein Tiefenanschlag 3.4, der die Stecktiefe des Verbindungsprofils 4 begrenzt.

Auf der Oberseite der Basisplatte 3 im Bereich des Tiefenanschlags 3.4 kann eine Kappe 3.3 vorgesehen sein. Wenn das Verbindungsprofil 4 bis zum Tiefenanschlag 3.4 in der Aufnahme 3.1 steckt, verhindert die Kappe 3.3, dass das Verbindungsprofil 4 nach oben aus der Aufnahme herausrutscht. Die Kappe 3.3 kommt insbesondere zum Tragen, wenn mit dem Schraubenzieher eine Hebelkraft auf das Verbindungsprofil 4 ausgeübt wird. Zudem kann die Kappe 3.3 so ausgebildet sein, dass sie als Anschlag für das Handwerkzeug 20 dienen kann (siehe Figur 9).

Das Verbindungsprofil 4 kann wie folgt mit der Basisplatte 3 verbunden werden. Zuerst steckt man das Verbindungsprofil 4 bis zum Anschlag in die Aufnahme 3.1. Anschliessend wird der Schraubenzieher in die Nut 4.3 des Verbindungsprofils 4 gesteckt (siehe Figuren 9 und 13). Der als Hebel dienende Schraubenzieher wird nun quer zur Steckrichtung Ry in Richtung der Ausbuchtung 3.2 gedrückt. Dabei verformt sich der vor der Ausbuchtung liegende Abschnitt 4.1 des Stegs 4.4, sodass er in die Ausbuchtung 3.2 ragt. Mit dem Schraubenzieher wird vorzugsweise so fest gegen den Steg 4.4 gedrückt, dass er aufreisst und die so gebildete Nase 4.1 mit der Ausbuchtung 3.2 einen Formschluss bildet. Weil der Steg 4.4 links und rechts von der Nase 4.1 an der Wandung der Aufnahme 3.1 anliegt, wird der Steg 4.4 dort nicht verformt. Die Aufnahme 3.1 ist vorteilhafterweise mit einem Führungssteg 3.5 ausgestattet. Das Verbindungsprofil 4 hat ein an den Führungssteg 3.5 angepasstes Profil. Um das Einführen des Verbindungsprofils 4 in die Aufnahme 3.1 zu erleichtern, kann der Führungssteg 3.5 an seinem vorderen Abschnitt 3.6 konisch ausgebildet sein.

Die Ausbuchtung 3.7 kann optional vorgesehen sein. Insbesondere wenn die Basisplatte 3 im Gussverfahren hergestellt wird, kann die Ausbuchtung 3.7 hilfreich sein, um beim Entformen das Formwerkzeug herausziehen zu können.

Um zu verhindern, dass der Schraubenzieher während des Drückens aus der Nut 4.3 des Verbindungsprofils 4 herausrutscht, kann im unteren Bereich der Nut 4.3 ein Wulst 4.2 vorgesehen sein. In den Figuren 13 und 14 ist eine Ausführungsform des Verbindungsprofils 4 mit einem solchen Wulst 4.2 dargestellt. Wenn die Klinge des Schraubenziehers unter dem Wulst 4.2 am Verbindungsprofil 4 anliegt, sorgt der Wulst 4.2 dafür, dass die Klinge nicht nach oben aus der Nut 4.3 herausrutschen kann.

Bei der in den Figuren gezeigten Ausführungsform weist die Basisplatte 3 im vorderen und im hinteren Bereich jeweils einen Höcker 3.9 zum Befestigen der Stützen 5 auf. Seitlich benachbart zum Höcker 3.9 befinden sich zwei Erhebungen 3.8 und dazwischen ein Schlitz 3.11. Damit die Stütze 5 am Höcker 3.9 respektive an der Basisplatte 3 befestigt werden kann, weist der Höcker 3.9 seitlich zwei Nuten 3.10 auf. Die Stütze 5 weist unten zwei entsprechende Laschen 5.1 auf. Um die Stütze 5 auf der Basisplatte 3 zu montieren, werden die Laschen 5.1 seitlich in die Nuten 3.10 geschoben. Auf diese Weise wird verhindert, dass die Stütze 5 nach oben vom Höcker 3.9 abgezogen werden kann. Anschliessend wird die Klinge des Schraubenziehers in die Nut 5.4 der Stütze 5 gesteckt (Figuren 11 und 21). Der als Hebel dienende Schraubenzieher wird nun quer zur Steckrichtung Rx in Richtung des Schlitzes 3.11 gedrückt. Dabei verformt sich ein Abschnitt des Stegs 5.2, sodass er in den Schlitz 3.11 ragt. Mit dem Schraubenzieher wird vorzugsweise so fest gegen den Steg 5.2 gedrückt, dass er aufreisst, eine Nase bildet und mit dem Schlitz 3.11 und den beiden Erhebungen 3.8 einen Formschluss bildet. Weil der Steg 5.2 links und rechts von der Nase an beiden Erhebungen 3.8 anliegt, wird der Steg 5.2 dort nicht verformt.

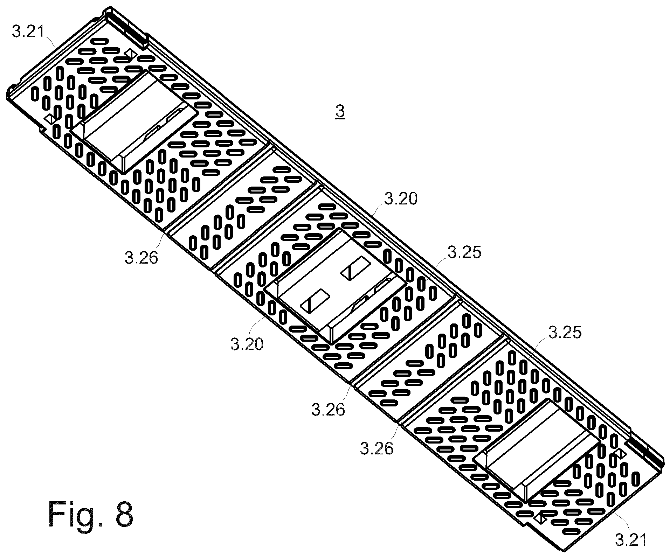

In Figur 8 ist eine Ausführungsform der Basisplatte 3 in einer dreidimensionalen Ansicht schräg von unten dargestellt. Die Basisplatte 3 kann auf ihrer Unterseite Noppen 3.25 aufweisen. Dadurch kann die Rutschfestigkeit erhöht und die Durchlüftung verbessert werden.

Zudem kann die Basisplatte 3 Markierungen 3.26 aufweisen, die kennzeichnen, wo die Basisplatte 3 vorteilhafterweise getrennt werden kann. Für den Fall, dass man nur einen Teil der Basisplatte 3 benötigt, kann man die Basisplatte dort trennen, wo sich eine der Markierungen 3.26 befindet. Die Markierungen 3.26 können zum Beispiel hilfreich sein, wenn die Basisplatten, die an den Rändern des Photovoltaikanlage liegen, auf die gleiche Länge gekürzt werden sollen. Bei Bedarf kann die Basisplatte aber auch an jeder anderen Stelle geteilt werden.

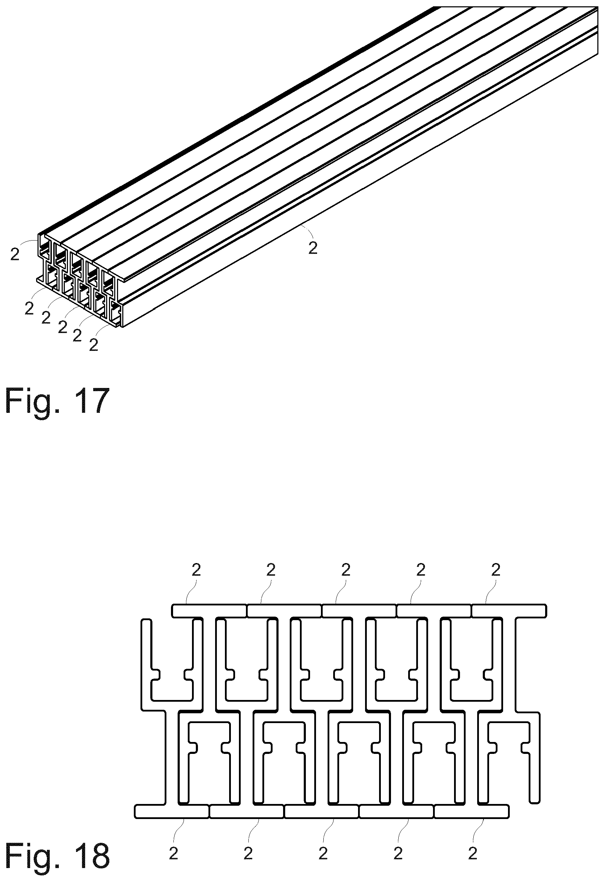

Die Verbindungsprofile 2 sind besonders gut und platzsparend stapelbar. Figur 17 zeigt einen Stapel Verbindungsprofile 2 in einer dreidimensionalen Ansicht und Figur 18 zeigt den Stapel in der Ansicht von vorne.

Als stangenförmiges Verbindungsprofil wird hier ein Bauteil verstanden, dessen Breite und Höhe im Verhältnis zu seiner Länge relativ klein sind. Im Querschnitt hat das Bauteil ein an die technischen Anforderungen angepasstes Profil.

Als streifenförmiges, flexibles Bauteil 18 wird hier ein längliches, flächiges Bauteil bezeichnet, das als Unterlage für den Ballast dient. Das streifenförmige Bauteil 18 kann zum Beispiel eine Bahn aus Dachpappe, ein Netz, ein Gewebe oder eine Matte sein. Als Ballast können zum Beispiel Kies, Schotter oder Steine verwendet werden.

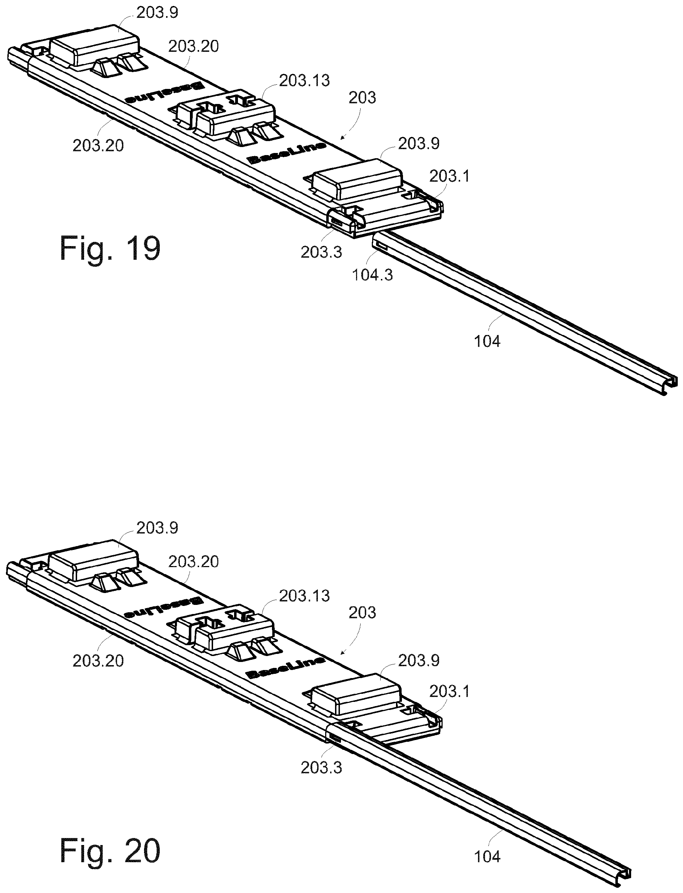

In den Figuren 19 und 20 ist eine weitere Ausführungsform der Basisplatte dargestellt, die mit dem Bezugszeichen 203 gekennzeichnet ist. Zudem zeigen die Figuren 19 und 20 eine weitere Ausführungsform des Verbindungsprofils, das mit dem Bezugszeichen 104 gekennzeichnet ist.

Die Basisplatte 203 unterscheidet sich von der Basisplatte 3 lediglich im Bereich der Längsverbinder-Aufnahme 203.1. Das Verbindungsprofil 104 unterscheidet sich vom Verbindungsprofil 4 nicht im Querschnitt, sondern nur im Steckbereich.

Der Modulträger 1 kann auch aus mehreren der Basisplatten 203 und den Verbindungsprofilen 104 aufgebaut sein. Das stangenförmige Verbindungsprofil 104 weist in dem Bereich, in dem es auf die Aufnahme 203.1 gesteckt wird, eine Ausklinkung 104.3 auf. Bei der Basisplatte 203 ist die Aufnahme 203.1 mit einem Wulst 203.3 ausgestattet. Die Ausklinkung 104.3 am Verbindungsprofil und der Wulst 203.3 an der Aufnahme bilden zusammen eine Schnappverbindung. Um das Verbindungsprofil 104 und die Basisplatte 203 miteinander zu verbinden, genügt es, das Verbindungsprofil 104 so fest in die Aufnahme 203.1 zu stecken, sodass die Schnappverbindung einrastet.

Die Basisplatte 3 wie auch die Basisplatten 103 und 203 können aus Kunststoff und vorzugsweise aus recycliertem Kunststoff hergestellt sein. Um die Basisplatten besonders kostengünstig herzustellen, eigen sich Guss- oder Spritzgussverfahren.

Der Modulträger 1 kann so ausgerichtet und die Stützen 5 und 6 können so angeordnet werden, dass die Photovoltaikmodule 10 in Ost-West-Richtung ausgerichtet sind und in einem Neigungswinkel α von zum Beispiel α = 10° gegenüber der Horizontalen geneigt sind. Statt dessen kann der Modulträger 1 zum Beispiel auch so ausgerichtet werden, dass die Photovoltaikmodule 10 in Nord-Süd-Richtung ausgerichtet sind. Grundsätzlich können die Ausrichtung und die Form des Modulträgers 1 an die örtlichen Gegebenheiten und die Erfordernisse angepasst werden.

Die Stützen 5 und 6 sind so auf der Basisplatte 3 anordenbar, dass sich die einzelnen Photovoltaikmodule 10 nicht gegenseitig beschatten.

Durch eine geeignete Kombination aus niedrigen und hohen Stützen 5 und 6 und die flache Ausbildung der Basisplatte 3 können die Photovoltaikmodule 10 besonders aerodynamisch angeordnet werden. Eine solche besonders günstige aerodynamische Anordnung der Photovoltaikmodule 10 ist in Figur 4 gezeigt. Bei dieser Anordnung kann mit besonders wenig Ballast eine ausreichende Beschwerung respektive Fixierung der gesamten Photovoltaikanlage erreicht werden.

Die schmalen Stützen 5 und 6 tragen dazu bei, dass der Modulträger 1 mit ausserordentlich wenig Material auskommt.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 22 gezeigten Komponenten des Modulträgers auch auf eine andere als in den Figuren gezeigte Weise miteinander kombinierbar. Auch können die gezeigten Komponenten des Modulträgers zu einem anders geformten als in den Figuren gezeigten Modulträger zusammengebaut werden. Die Erfindung wird durch die vorliegenden Ansprüche definiert.

### Bezugszeichenliste

- 1: Modulträger
- 2: Verbindungsprofil
- 2.1: verformter Abschnitt oder Nase
- 2.2: Wulst
- 2.3: Nut
- 2.4: Steg
- 3: Basisplatte
- 3.1: Aufnahme oder Längsverbinder-Aufnahme
- 3.2: Ausbuchtung
- 3.3: Höcker
- 3.4: Anschlag
- 3.5: Steg
- 3.6: Verjüngung
- 3.7: Ausbuchtung
- 3.8: Erhebung
- 3.9: Höcker
- 3.10: Nut
- 3.11: Spalt
- 3.12: Erhebung
- 3.13: Höcker
- 3.14: Aufnahme oder Querverbinder-Aufnahme
- 3.15: Ausbuchtung
- 3.16: Ausbuchtung
- 3.17: Anschlag
- 3.20: Längsseite
- 3.22: Steg
- 3.21: Stirnseite
- 3.25: Noppe
- 3.26: Markierung
- 4: Verbindungsprofil
- 4.1: verformter Abschnitt oder Nase
- 4.2: Wulst
- 4.3: Nut
- 4.4: Steg
- 5: Stütze
- 5.1: Lasche
- 5.2: plastisch verformbarer Abschnitt oder Steg
- 5.3: Wulst
- 5.4: Nut
- 6: Stütze
- 6.1: Lasche
- 6.2: plastisch verformbarer Abschnitt oder Steg
- 6.3: Wulst
- 6.4: Nut
- 10: Photovoltaikmodul
- 17: Weg
- 18: streifenförmiges, flexibles Bauteil
- 20: Werkzeug
- B: Breite
- L: Länge
- LA: Längsachse
- ML: Mittellinie
- Rx: Steckrichtung
- Ry: Steckrichtung
- x: x-Achse
- y: y-Achse
- z: z-Achse

## Patentansprüche

1. Modulträger für Photovoltaikmodule,
mit stangenförmigen Verbindungsprofilen (2; 4),
**dadurch gekennzeichnet, dass**
der Modulträger Basisplatten (3) umfasst, auf denen Stützen (5; 6) zum Tragen der Photovoltaikmodule (10) befestigt sind, und die Basisplatten (3) mittels den stangenförmigen Verbindungsprofilen (4) untereinander verbindbar sind,
die Basisplatten (3) jeweils eine Längsverbinder-Aufnahme (3.1) aufweisen, in die eines der Verbindungsprofile (4) in einer durch die Längsverbinder-Aufnahme vorgegebenen ersten Steckrichtung (Ry) steckbar ist,
die Längsverbinder-Aufnahme (3.1) eine Ausbuchtung (3.2) aufweist, die quer zur ersten Steckrichtung (Ry) angeordnet ist, und
ein Abschnitt (4.1) des in der Längsverbinder-Aufnahme (3.1) steckenden Verbindungsprofils (4) aufgrund einer plastischen Verformung in die Ausbuchtung (3.2) ragt und mit dieser einen Formschluss bildet.

2. Modulträger nach Anspruch 1,
- bei dem die Basisplatte (3) eine Querverbinder- Aufnahme (3.14) aufweist, und
- bei dem die Querverbinder-Aufnahme (3.14) so ausgebildet ist, dass sie eine zweite Steckrichtung (Rx) vorgibt, die quer zur ersten Steckrichtung (Ry) verläuft, sodass eines der stangenförmigen Verbindungsprofile (2) in der zweiten Steckrichtung (Rx) in die Querverbinder-Aufnahme (3.14) steckbar ist.

3. Modulträger nach Anspruch 1 oder 2, bei dem die Basisplatte (3) eine Längsseite (3.20) und eine Stirnseite (3.21) aufweist, wobei an der Stirnseite (3.21) die Längsverbinder-Aufnahme (3.1) und eine weitere Längsverbinder-Aufnahme (3.1) angeordnet sind, sodass zwei der stangenförmigen Verbindungsprofile (4) in der ersten Steckrichtung (Ry) in die Längsverbinder-Aufnahmen (3.1) steckbar sind.

4. Modulträger nach Anspruch 3, bei dem die Basisplatte (3) eine zweite Stirnseite (3.21) aufweist, wobei an der zweiten Stirnseite (3.21) wenigstens eine zusätzlich Längsverbinder- Aufnahme (3.1) angeordnet ist, sodass eines der stangenförmigen Verbindungsprofile (4) in einer zur ersten Steckrichtung (Ry) entgegengesetzten Richtung in die zusätzliche Längsverbinder-Aufnahme (3.1) steckbar ist.

5. Modulträger nach einem der Ansprüche 1 bis 4, bei dem die Basisplatte (3) aus Kunststoff, insbesondere recyceltem Kunststoff, oder Beton hergestellt ist.

6. Modulträger nach einem der Ansprüche 1 bis 5, bei dem die Längsverbinder-Aufnahme (3.1) einen Tiefenanschlag (3.4) zur Begrenzung der Stecktiefe aufweist und im Bereich des Tiefenanschlags oben als Kappe (3.3) ausgebildet ist, unter die das Verbindungsprofil (4) steckbar ist.

7. Modulträger nach einem der Ansprüche 1 bis 6,
- bei dem die Längsverbinder-Aufnahme (3.1) einen Führungssteg (3.5) und eine parallel dazu angeordnete Führungsnut (3.1) aufweist, und
- bei dem das stangenförmige Verbindungsprofil (4) so profiliert ist, dass es mit dem Führungssteg (3.5) und der Führungsnut (3.1) einen Formschluss bildet, wenn es in der Längsverbinder-Aufnahme (3.1) stecket .

8. Modulträger nach einem der Ansprüche 1 bis 7, bei dem das Verbindungsprofil (2; 4) aus Aluminium hergestellt ist.

9. Modulträger nach einem der Ansprüche 1 bis 8, bei dem die Basisplatte (3) einen Höcker (3.9) aufweist, auf den eine der Stützen (5; 6) aufschiebbar ist und mit dem die Stütze (5; 6) im montierten Zustand in vertikaler Richtung formschlüssig verbunden ist .

10. Modulträger nach Anspruch 9,
- bei dem die Stütze (5) unten Laschen (5.1) aufweist,
- bei dem der Höcker (3.9) seitlich angeordnete Nuten (3.10) aufweist, in die die Laschen (5.1) der Stütze (5) hineinschiebbar sind.

11. Modulträger nach Anspruch 9 oder 10,
- bei dem die Basisplatte (3) neben dem Höcker (5) einen Schlitz (3.11) aufweist,
- bei dem die Stützte (5) einen mit einem Handwerkzeug plastisch verformbaren Abschnitt (5.2) aufweist,
- bei dem, im montierten Zustand, der plastisch verformte Abschnitt (5.2) in den Schlitz (3.11) ragt und mit ihm einen Formschluss bildet.

12. Modulträger nach Anspruch 9, 10 oder 11, bei dem ein Teil der Stützen (6) niedriger als ein weiterer Teil der Stützen (5) ist.

13. Modulträger nach einem der Ansprüche 9 bis 12, bei dem die Stützen (5; 6) aus Aluminium hergestellt sind.

14. Modulträger nach einem der Ansprüche 1 bis 13, bei dem ein Teil des Modulträgers (1) mit einem streifenförmigen, flexiblen Bauteil (18) bedeckt ist, das so ausgebildet ist, dass es mit Ballast bedeckbar ist.

15. Verfahren zum Aufbauen eines Modulträgers für Photovoltaikmodule nach einem der Ansprüche 1 bis 14,
- bei dem eines der stangenförmigen Verbindungsprofile (2; 4) in die Längsverbinder-Aufnahme (3.1) gesteckt wird, und
- bei dem mit Hilfe eines als Hebel einsetzbaren Handwerkzeugs (20) der Abschnitt (4.1) des in der Längsverbinder-Aufnahme (3.1) steckenden Verbindungsprofils (4) in die Ausbuchtung (3.2) gedrückt wird .

## Claims

1. Module support for photovoltaic modules,
with rod-shaped connecting profiles (2; 4),
**characterized in that**
the module support comprises base plates (3) on which supports (5; 6) for carrying the photovoltaic modules (10) are fastened, and the base plates (3) are connectable to one another by means of the rod-shaped connecting profiles (4), the base plates (3) each have a longitudinal connector receptacle (3.1) into which one of the connecting profiles (4) is insertable in a first insertion direction (Ry) specified by the longitudinal connector receptacle,
the longitudinal connector receptacle (3.1) has a recess (3.2) which is arranged transversely to the first insertion direction (Ry), and
a section (4.1) of the connecting profile (4) inserted in the longitudinal connector receptacle (3.1) projects into the recess (3.2) due to a plastic deformation and forms a positive fit with it.

2. Module support according to claim 1,
in which the base plate (3) has a transverse connector receptacle (3.14), and
in which the transverse connector receptacle (3.14) is designed such that it specifies a second insertion direction (Rx) which runs transversely to the first insertion direction (Ry), so that one of the rod-shaped connecting profiles (2) is insertable in the second insertion direction (Rx) into the transverse connector receptacle (3.14).

3. Module support according to claim 1 or 2, in which the base plate (3) has a longitudinal side (3.20) and an end face (3.21), wherein at the end face (3.21) the longitudinal connector receptacle (3.1) and a further longitudinal connector receptacle (3.1) are arranged, so that two of the rod-shaped connecting profiles (4) are insertable in the first insertion direction (Ry) into the longitudinal connector receptacles (3.1).

4. Module support according to claim 3, in which the base plate (3) has a second end face (3.21), wherein at the second end face (3.21) at least one additional longitudinal connector receptacle (3.1) is arranged, so that one of the rod-shaped connecting profiles (4) is insertable into the additional longitudinal connector receptacle (3.1) in a direction opposite to the first insertion direction (Ry).

5. Module support according to one of claims 1 to 4, in which the base plate (3) is made of plastic, in particular recycled plastic, or concrete.

6. Module support according to one of claims 1 to 5, in which the longitudinal connector receptacle (3.1) has a depth stop (3.4) for limiting the insertion depth and is formed as a cap (3.3) at the top in the region of the depth stop, under which the connecting profile (4) is insertable.

7. Module support according to one of claims 1 to 6,
in which the longitudinal connector receptacle (3.1) has a guide rib (3.5) and a guide groove (3.1) arranged parallel thereto, and
in which the rod-shaped connecting profile (4) is profiled such that it forms a positive fit with the guide rib (3.5) and the guide groove (3.1) when it is inserted in the longitudinal connector receptacle (3.1).

8. Module support according to one of claims 1 to 7, in which the connecting profile (2; 4) is made of aluminum.

9. Module support according to one of claims 1 to 8, in which the base plate (3) has a protuberance (3.9) onto which one of the supports (5; 6) is slidable and with which the support (5; 6), in the mounted state, is positively connected in the vertical direction.

10. Module support according to claim 9,
in which the support (5) has tabs (5.1) at the bottom,
in which the protuberance (3.9) has grooves (3.10) arranged at the side, into which the tabs (5.1) of the support (5) are slidable.

11. Module support according to claim 9 or 10,
in which the base plate (3) has, next to the protuberance (5), a slot (3.11),
in which the support (5) has a section (5.2) plastically deformable with a hand tool,
in which, in the mounted state, the plastically deformed section (5.2) projects into the slot (3.11) and forms a positive fit with it.

12. Module support according to claim 9, 10 or 11, in which a part of the supports (6) is lower than a further part of the supports (5).

13. Module support according to one of claims 9 to 12, in which the supports (5; 6) are made of aluminum.

14. Module support according to one of claims 1 to 13, in which a part of the module support (1) is covered with a strip-shaped, flexible component (18) which is designed such that it is coverable with ballast.

15. Method for assembling a module support for photovoltaic modules according to one of claims 1 to 14,
in which one of the rod-shaped connecting profiles (2; 4) is inserted into the longitudinal connector receptacle (3.1), and
in which, with the aid of a hand tool (20) usable as a lever, the section (4.1) of the connecting profile (4) inserted in the longitudinal connector receptacle (3.1) is pressed into the recess (3.2).

## Revendications

1. Support de modules pour des modules photovoltaïques,
avec des profils de liaison en forme de tige (2; 4),
**caractérisé en ce que**
le support de modules comprend des plaques de base (3) sur lesquelles des montants (5; 6) destinés à porter les modules photovoltaïques (10) sont fixés, et les plaques de base (3) sont raccordables entre elles au moyen des profils de liaison en forme de tige (4),
les plaques de base (3) présentent chacune un logement de connecteur longitudinal (3.1) dans lequel l'un des profils de liaison (4) est insérable selon une première direction d'insertion (Ry) imposée par le logement de connecteur longitudinal,
le logement de connecteur longitudinal (3.1) présente un évidement (3.2) disposé transversalement à la première direction d'insertion (Ry), et
une section (4.1) du profil de liaison (4) inséré dans le logement de connecteur longitudinal (3.1) s'étend dans l'évidement (3.2) du fait d'une déformation plastique et forme avec celui-ci une liaison par forme.

2. Support de modules selon la revendication 1,
dans lequel la plaque de base (3) présente un logement de connecteur transversal (3.14), et
dans lequel le logement de connecteur transversal (3.14) est conçu de telle sorte qu'il impose une deuxième direction d'insertion (Rx) s'étendant transversalement à la première direction d'insertion (Ry), de sorte que l'un des profils de liaison en forme de tige (2) est insérable, selon la deuxième direction d'insertion (Rx), dans le logement de connecteur transversal (3.14).

3. Support de modules selon la revendication 1 ou 2, dans lequel la plaque de base (3) présente un côté longitudinal (3.20) et une face frontale (3.21), le logement de connecteur longitudinal (3.1) et un autre logement de connecteur longitudinal (3.1) étant disposés sur la face frontale (3.21), de sorte que deux des profils de liaison en forme de tige (4) sont insérables, selon la première direction d'insertion (Ry), dans les logements de connecteur longitudinal (3.1).

4. Support de modules selon la revendication 3, dans lequel la plaque de base (3) présente une deuxième face frontale (3.21), au niveau de laquelle au moins un logement de connecteur longitudinal supplémentaire (3.1) est disposé, de sorte que l'un des profils de liaison en forme de tige (4) est insérable dans le logement de connecteur longitudinal supplémentaire (3.1) dans une direction opposée à la première direction d'insertion (Ry).

5. Support de modules selon l'une des revendications 1 à 4, dans lequel la plaque de base (3) est fabriquée en plastique, en particulier en plastique recyclé, ou en béton.

6. Support de modules selon l'une des revendications 1 à 5, dans lequel le logement de connecteur longitudinal (3.1) présente une butée de profondeur (3.4) destinée à limiter la profondeur d'insertion et est formé, dans la zone de la butée de profondeur, en tant que capot (3.3) sur la partie supérieure, sous lequel le profil de liaison (4) est insérable.

7. Support de modules selon l'une des revendications 1 à 6,
dans lequel le logement de connecteur longitudinal (3.1) présente une nervure de guidage (3.5) et une rainure de guidage (3.1) disposée parallèlement à celle-ci, et
dans lequel le profil de liaison en forme de tige (4) est profilé de sorte qu'il forme une liaison par forme avec la nervure de guidage (3.5) et la rainure de guidage (3.1) lorsqu'il est inséré dans le logement de connecteur longitudinal (3.1).

8. Support de modules selon l'une des revendications 1 à 7, dans lequel le profil de liaison (2; 4) est fabriqué en aluminium.

9. Support de modules selon l'une des revendications 1 à 8, dans lequel la plaque de base (3) présente un bossage (3.9) sur lequel l'un des montants (5; 6) est coulissant, et avec lequel le montant (5; 6), à l'état monté, est relié par liaison par forme dans la direction verticale.

10. Support de modules selon la revendication 9,
dans lequel le montant (5) présente en partie inférieure des languettes (5.1),
dans lequel le bossage (3.9) présente des rainures (3.10) disposées latéralement, dans lesquelles les languettes (5.1) du montant (5) sont coulissables.

11. Support de modules selon la revendication 9 ou 10,
dans lequel la plaque de base (3) présente, à côté du bossage (5), une fente (3.11),
dans lequel le montant (5) présente une section (5.2) déformable plastiquement à l'aide d'un outil manuel,
dans lequel, à l'état monté, la section (5.2) déformée plastiquement s'étend dans la fente (3.11) et forme avec celle-ci une liaison par forme.

12. Support de modules selon la revendication 9, 10 ou 11, dans lequel une partie des montants (6) est plus basse qu'une autre partie des montants (5).

13. Support de modules selon l'une des revendications 9 à 12, dans lequel les montants (5; 6) sont fabriqués en aluminium.

14. Support de modules selon l'une des revendications 1 à 13, dans lequel une partie du support de modules (1) est recouverte d'un composant flexible en forme de bande (18), conçu de telle sorte qu'il peut être recouvert de ballast.

15. Procédé de montage d'un support de modules pour des modules photovoltaïques selon l'une des revendications 1 à 14,
dans lequel l'un des profils de liaison en forme de tige (2; 4) est inséré dans le logement de connecteur longitudinal (3.1), et
dans lequel, à l'aide d'un outil manuel (20) utilisable comme levier, la section (4.1) du profil de liaison (4) inséré dans le logement de connecteur longitudinal (3.1) est pressée dans l'évidement (3.2).
